# EUROPÄISCHE PATENTSCHRIFT

(11) **EP 1 198 331 B1**
(45) Veröffentlichungstag und Bekanntmachung des Hinweises auf die Patenterteilung: **17.12.2003**
(21) Anmeldenummer: 00954530.2
(22) Anmeldetag: 19.07.2000
(51) Int. Cl.: B27N 3/28, B27N 3/08

(54) **VERFAHREN ZUM STRANGPRESSEN VON PFLANZLICHEN KLEINTEILEN**
METHOD FOR EXTRUDING SMALL VEGETAL PARTS
PROCEDE POUR EXTRUDER DES PETITES PIECES VEGETALES

(30) Priorität: 22.07.1999 DE 29912822 U
(43) Veröffentlichungstag der Anmeldung: 24.04.2002
(73) Patentinhaber: Anton Heggenstaller AG, D-86556 Unterbernbach (DE)
(72) Erfinder: SPIES, Xaver, D-86556 Unterbernbach (DE)
(74) Vertreter: Ernicke, Hans-Dieter, Dipl.-Ing.
(86) Internationale Anmeldenummer: EP0006872
(87) Internationale Veröffentlichungsnummer: WO01007222

(56) Entgegenhaltungen:
- EP-A- 0 339 952
- EP-A- 0 376 175
- EP-A- 0 562 219
- EP-A- 0 811 471
- US-A- 5 902 442

## Beschreibung

Die Erfindung bezieht sich auf ein Verfahren zum Strangpressen von mit Bindemitteln vermengten Kleinteilen, insbesondere aus Holz, bei dem das Kleinteilgemenge aus einem Füllraum mittels eines Strangpresskolbens durch einen formgebenden Rezipienten und einen beheizten Aushärtekanal gepresst und mit Dampf beaufschlagt wird, sowie auf Vorrichtungen zur Durchführung dieser Verfahren.

Bei Strangpressen besteht das grundsätzliche Bestreben, eine schnellere Abbindung des Stranges unter Reduzierung von Anlagenlänge zu erreichen. Durch die EP 0 376 175 ist es bekannt, zwischen der Strangpresse und dem Aushärtekanal einen sogenannten Reaktor anzuordnen, der den verdichteten Strang starr umgreift und durch den Wasser, Wasserdampf oder zusätzliches flüssiges oder dampfförmiges Bindemittel auf die Oberfläche des Stranges aufgebracht werden kann.

Hierbei wird ausschließlich das Ziel verfolgt, die Oberfläche des Stranges zu verbessern. Dieses vorbekannte Verfahren geht jedoch davon aus, dass die zu verpressenden Späne und Kleinteile nur eine wesentlich geringere Feuchtigkeit als üblich besitzen dürfen, um das Wasser oder den Wasserdampf direkt aufnehmen zu können.

Mit diesem bekannten Verfahren ist jedoch weder eine vollständige Durchwärmung des-Stranges, noch eine Verkürzung der Abbindezeit beabsichtigt.

Durch die DE-OS 20 16 771 ist es zur Herstellung von Holzspanplatten bekannt, im Bereich eines beheizten Aushärtekanals überhitzten Dampf auf den Strang und damit in das gepresste Material zu blasen, um die dann auftretende Feuchtigkeit mittels Einblasens von Pressluft wieder aus dem Strang abzuleiten. Auf diese Weise wird einerseits das Entweichen des Dampfes längs der Mantelfläche des Stranges nicht verhindert und andererseits keine Durchhärtung des Stranges durch Kondensation des Dampfes offenbart.

Zur Beschleunigung des Aushärteprozesses lehrt die EP-0 811 471, in den Innenraum der Presse überhitzten Dampf einzuleiten. Dieser Innenraum wird von einem perforierten feststehenden Rohr innenseitig und von umlaufenden Pressbändern bzw. Pressplattenbändern außenseitig gebildet, zwischen denen die Holzspäne beim Strangpressen zu einem Rohr verdichtet werden. Die Einwirkung des Dampfes erfolgt daher auf die noch nicht abgebundenen Späne und soll offenbar den sonst üblichen, von außen beheizten Aushärtekanal ersetzen.

Der Erfindung liegt hingegen die Aufgabe zu Grunde, durch eine Dampfzufuhr besonderer Art eine wesentlich schnellere Durchwärmung des Stranges und damit eine bedeutend höhere Produktionsgeschwindigkeit der Strangpresse zu ermöglichen.

Diese Aufgabe wird erfindungsgemäß durch ein Verfahren gelöst, wonach der Dampf im Bereich des Aushärtekanals auf den verdichteten und im Außenbereich schon in Aushärtung befindlichen Strang von außen her auf gebracht wird, gekennzeichnet, dass die Strangmantelfläche beidseits der unter Druck stehenden Dampfzufuhr gegen Dampfentweichen abgedichtet und die Aushärtung des Stranges durch Kondensation des DAmpfes im Strang herbeigeführt wird, was zu einem plötzlichen Temperaturanstieg führt.

Für die Fachwelt erschien es abwegig, auf die Mantelfläche des bereits voll verdichteten Stranges Dampf mit dem Ziel der Durchwärmung des Stranges zu richten, weil man des Glaubens war, dass das verdichtete Material des Stranges das Ein- und Durchdringen des Dampfes verhindern würde. Deshalb wird beim Stand der Technik der Dampf in der Regel nur auf den vorverdichteten, aber noch nicht der Aushärtung zugeführten Strang aufgebracht.

Es ist daher sehr überraschend, dass es durch das erfindungsgemäße Verfahren gelingt, die Aushärtezeit und die Aushärtelänge des Stranges wesentlich zu verkürzen. Hierbei kommt es darauf an, die gegen die Mantelfläche gerichteten Dampfströme vor dem Entweichen längs der Mantelfläche zu bewahren und ein gezieltes vollständiges Eindringen des Dampfes in den Strang zu erreichen.

Hierzu offenbart die Erfindung verschiedene Möglichkeiten der Abdichtung zwischen der Strangmantelfläche und den Backen, welche den Strang umgreifen und durch die der Dampf zugeführt wird.

Man kann beispielsweise den Strang mit den Backen radial verdichten und schafft durch die so entstehende Formänderung des Stranges eine natürliche Sperre gegen unerwünschtes Entweichen des Dampfes. Diese Maßnahme setzt voraus, dass die radiale Verdichtung des Stranges dann erfolgt, wenn der Strang beim Rückhub des Strangpresskolbens sich im Stillstand befindet. Es ist ferner darauf zu achten, das der Strang im fertigen ausgehärteten Zustand eine gleichmäßige Mantelfläche trotz des erfindungsgemäßen Nachpressens behält.

Eine andere erfindungsgemäße Möglichkeit der Abdichtung ist durch die Anordnung spezieller Abdichtelemente in den gegen die Strangmantelfläche gerichteten Flächen der Backen gegeben, durch welche der Dampf aufgebracht wird. Der Ort dieser Abdichtelemente befindet sich in Strangrichtung mindestens beidseits der Dampfzufuhrstellen, was nicht ausschließt, dass die einzelne Dampfzufuhrstelle auch ringsum abgedichtet wird.

Anderweitige Abdichtungen werden durch die Erfindung keineswegs ausgeschlossen.

Die Erfindung eröffnet die Möglichkeit, mit der erfindungsgemäßen Zufuhr des Dampfes einen Großteil, z. B. bis über 90% der zur Aushärtung des Stranges benötigten Wärmezufuhr zu bestreiten. Der Dampf führt zu einer schnelleren Reaktionsgeschwindigkeit und damit zu einer wesentlichen Leistungssteigerung der Strangpresse.

Auch werden die Qualität der Strangoberfläche sowie die Festigkeit des Stranges durch das erfindungsgemäße Verfahren wesentlich verbessert.

Eine nach der Erfindung gestaltete Strangpresse weist gegenüber vorbekannten Strangpressen nur noch weniger als die Hälfte der sonst benötigten Heizgänge auf.

In den Unteransprüchen sind Ausführungsformen und Varianten der Erfindung dargestellt, deren Wirkungsweise sich aus der Zeichnung und der Beschreibung ergibt. Von Bedeutung ist hierbei, daß die Nachpressung des Stranges vorzugsweise beim Stillstand des Strangvorschubes erfolgt. Ebenso geschieht die Dampfzufuhr vorzugsweise während des Stillstandes des Stranges.

Im Anschluss an die erfindungsgemäße Pressstation befindet sich eine Bremseinheit zur Einstellung der Strangreibung und der Rohdichte des Stranges, die zugleich als Nachhärtezone dient. Diese Bremseinheit verhindert ein unkontrolliertes Expandieren des Stranges in Längsrichtung, das beim Lüften der zentrischen Pressbacken auftritt und zu Rissen im Strang führen kann.

Die Länge der Pressbacken der Pressstation überdeckt einen oder mehrere Presshübe und entspricht beispielsweise dem doppelten Hub des Strangpresskolbens. Dadurch wird erreicht, daß eine Überdeckung mehrerer Stoßstellen des Stranges erfolgt, was sicherstellt, dass das gesamte Strangvolumen gleichmäßig durchwärmt wird.

Gegenstand der Erfindung ist ferner eine Steuerung, die es ermöglicht, daß die Pressbacken der Pressstation gelüftet sind, wenn der Strang durch den Strangpresskolben voranbewegt wird.

Diese und weitere Merkmale der Erfindung sind in der Zeichnung schematisch und beispielsweise beschrieben. Es zeigen:
- Figur 1:: eine schematische Seitenansicht einer horizontalen Kolbenstrangpresse mit den verschiedenen Stationen,
- Figur 2:: einen Querschnitt durch eine Pressstation in vergrößerter Darstellung entlang der Linie II-II in Figur 1 und
- Figur 3:: einen Querschnitt durch eine Variante der Anordnung nach Figur 2.

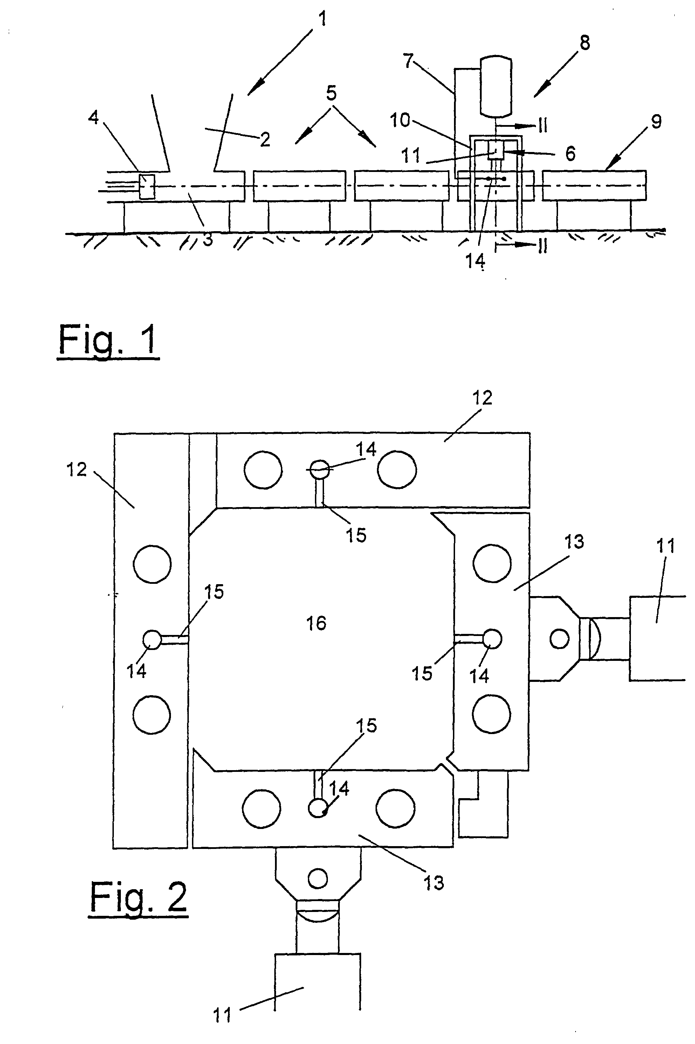

Im Beispiel der Figur 1 ist das Schema einer normalen Strangpresse (1) gezeigt. Ein Zuführschacht (2) führt das mit Bindemittel vermengte Kleinteilgemisch, insbesondere aus pflanzlichen Kleinteilen, in einen Füll- und Pressraum (3), der in nicht dargestellter Weise durch einen Schließschieber nach oben abgeschlossen werden kann. In der Strangpressachse ist ein Strangpresskolben (4) hinund herbewegbar, der das in den Füll- und Pressraum (3) eingeführte Kleinteilgemenge verdichtet und in einen Aushärtekanal (5) abschiebt, der in herkömmlicher Weise beheizt werden kann.

Im Bereich dieses ersten Abschnittes eines Aushärtekanals (5) beginnt die Leimreaktion an der Außenfläche des gepressten Stranges, wohingegen sich der innere Bereich des Stranges noch im gepressten, aber noch nicht reagierenden Zustand befindet.

Im Bereich des Aushärtekanals (5) ist eine Pressstation (6) vorgesehen, welche die Aufgabe hat, den in diesem Bereich befindlichen Strangabschnitt radial zur Strangpressachse nachzuformen. Zu diesem Zweck ist ein stabiler Rahmen (10) erforderlich, der die Reaktionskraft der Pressdruck erzeugenden Anordnungen aufnimmt.

Das Ziel dieser Nachformung besteht darin, den Strang, obwohl er bereits axial verdichtet ist, in radialer Richtung nachzuformen und gegen Dampfaustritt an den Pressbacken abzudichten. Hierbei wird vorzugsweise ein Verformungsweg in der Größenordnung von 0,5 mm bis 2 mm je Pressbacke angestrebt.

Das radiale Verdichten des Stranges mit der damit verbundenen Formänderung wirkt wie eine Dampfsperre, die das radiale Eindringen des Dampfes in den Strang konzentriert begünstigt, aber das seitliche Entweichen des Dampfes längs der Strangmantelfläche verhindert.

Eine solche Nachverformung hat auch den Vorteil, dass die Oberflächenqualität des Stranges verbessert und dessen mechanische Festigkeit erhöht wird.

Die Erfindung sieht zugleich vor, dass während der Nachverformung oder im Anschluss daran eine intensive Dampfzufuhr auf den Strang erfolgt. Im Beispiel der Figur 1 ist symbolisch mit (7) eine Dampfzufuhrstation dargestellt, mit der Dampf, insbesondere Sattdampf oder heißes Gas, durch Kanäle (14) herangeführt wird, welche den in der Pressstation (6) befindlichen Strangabschnitt umgreifen.

Im Beispiel der Figur 2 ist im vergrößerten Querschnitt dargestellt, wie starre Kanalwände (12) und bewegliche Kanalwände (13) den Strang (16) insgesamt umgreifen. In den Kanalwänden (12,13) befinden sich Kanäle (14) für die Dampfzufuhr, von denen aus radiale Einspritzkanäle (15) in Richtung zum Strang (16) ausgehen. Mit (11) sind Presskolben bezeichnet, welche die beweglichen Kanalwände (13) gegen die starren Kanalwände (12) verschieben.

In einer Variante dieses Beispieles können auch alle Pressbacken (12,13) beweglich ausgebildet sein.

Die Nachverformung des Stranges (16) in der Pressstation (6) erfolgt, während sich der Strang (16) vorzugsweise in Ruhestellung befindet. Sobald der radiale Pressdruck durch die Presskolben (11) aufgebaut ist, werden Dampfventile geöffnet, wodurch in den zwischen den Kanalwänden (12,13) eingeschlossenen Teil des Stranges (16) Dampf einströmt. Der Dampf kondensiert in der Span-Matrix und bewirkt eine plötzliche Temperaturerhöhung, die die Aushärtereaktion im Strangkern schlagartig in Gang setzt.

Vor Beginn des nächsten Presshubes des Strangpresskolbens (4) werden die Pressbacken (12,13) gelüftet, so dass der Strang (16) ohne wesentliche Reibung durch die Pressstation (6) hindurch bewegt werden kann.

Die Erfindung sieht eine Steuerung vor, mit der eine wechselseitige Lüftung und Pressung beweglicher Kanalwände herbeigeführt wird. Wenn nämlich der Strang (16) in der Pressstation (6) der Nachpressung ausgesetzt wird, werden die beweglichen Pressbacken im Bereich des Aushärtekanales (5) angepresst. Sobald aber der Strangpresskolben (4) in Pressrichtung voranbewegt wird, erfolgt eine Entlüftung der Pressbacken (12,13) in der Pressstation (6). Der Druck auf die beweglichen Kanalwände im Aushärtekanal wird reduziert, um die Rohdichte des erzeugten Stranges einzustellen.

Bevorzugt sind die Pressstation (6) und die Dampfzuführstation (7) in einer baulichen Einheit (8) zusammengefasst, wie dies auch aus Figur 2 hervorgeht.

Im Anschluss an die Pressstation (6) befindet sich eine Bremseinheit (9). Diese ist beheizt und weist anstellbare Kanalwände auf, durch welche die Reibung der Kanalwände am Strang (16) eingestellt werden kann. Dadurch wirkt die Bremseinheit (9) als Nachhärtezone.

Die Länge der Kanalwände (12,13) gemäß Figur 2 entspricht vorzugsweise dem doppelten Presshub des Strangpresskolbens (4), wodurch eine Überdeckung mehrerer Stoßstellen verpresster Strangabschnitte erreicht wird.

Mit dem Gegenstand der Erfindung ist eine wesentliche Leistungssteigerung vorbekannter Strangpressen und ihrer Aushärtevorrichtungen möglich. Der in der Dampfzuführstation (7) zugeführte Dampf transportiert einen Großteil der insgesamt zur Aushärtung benötigten Wärmeenergie, insbesondere in der Größenordnung bis über 90%.

Mit dem Gegenstand der Erfindung ist somit ein neues Verfahren ausführbar, mit dem ein vollständig in Strangpressrichtung verdichteter Strang, der aber nur peripher teilausgehärtet ist, unter Druck mit Dampf beaufschlagt wird, der in einer so großen Menge zugeführt wird, daß ein plötzlicher Temperaturanstieg über den gesamten Strangquerschnitt entsteht. Zugleich wird der Strang im Bereich der Dampfzufuhr nachgeformt und erfährt somit eine radiale Einengung von ca. 0,5 mm bis 2 mm.

Der Vorteil dieser Maßnahme besteht u. a. darin, dass eine schnellere Reaktionsgeschwindigkeit und somit eine höhere Leistung der Strangpresse ermöglicht wird, wobei die Oberflächenqualität des Stranges verbessert und die Festigkeit des Stranges gesteigert wird. Daraus resultiert auch eine wesentliche Verkürzung der Baulänge der Strangpresse mit dem Aushärtekanal, weil nur noch weniger als die Hälfte der Heizgänge, gemessen am Stand der Technik, benötigt wird.

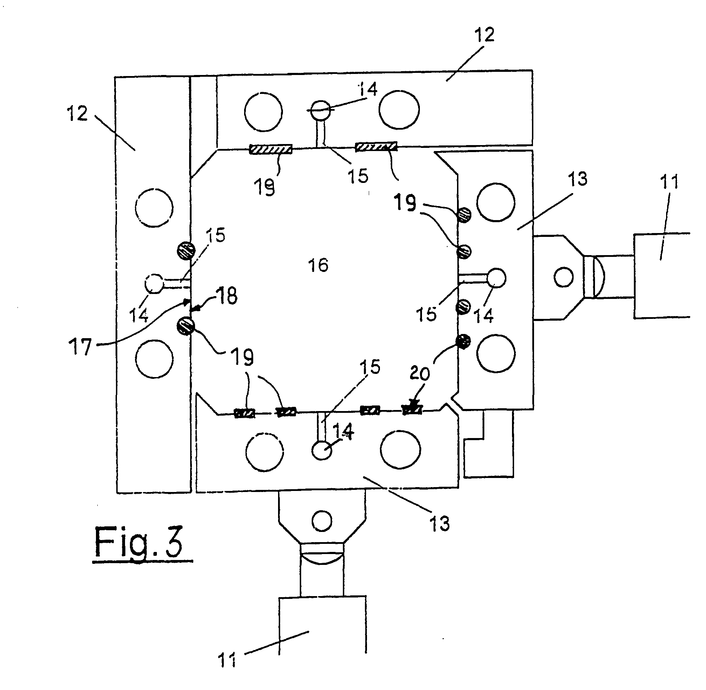

Im Beispiel der Figur 3 ist ein alternatives Ausführungsbeispiel der Erfindung gezeigt, bei dem von der radialen Verformung des peripher schon ausgehärteten Stranges (16) als Mittel zur Abdichtung der Strangmantelfläche (17) gegenüber den zugekehrten Innenflächen (18) der Backen (12,13) abgesehen wird. Statt dessen sind die Innenflächen (18) der Backen (12,13) mit Dichtungselementen (19) versehen, die von den Einspritzkanälen (15) distanziert angeordnet sind.

Wie die Figur 3 im Querschnitt zeigt, erstrecken sich die Dichtungselemente (19) beidseits der Einspritzkanäle (15) parallel zur Strangpressrichtung und verhindern somit ein Entweichen des Dampfes quer zur Strangpressachse.
Man kann die Dichtungselemente aber auch an den Stirnseiten der Backen (12,13) etwa ringförmig anordnen, um das Entweichen des Dampfes in Strangpressrichtung oder dazu umgekehrt zu vermeiden.

Als Dichtungselemente (19) eignen sich Streifen aus Kunststoff, Gummi, Schaumstoff oder dergleichen, die mit den Backen (12,13) fest verbunden sind und ggf. in passenden Vertiefungen (20) der Backen-Innenflächen (18) verankert sein können.

Grundsätzlich sind für dieses Ausführungsbeispiel alle Erkenntnisse des Standes der Technik einsetzbar, die sich mit der Abdichtung aneinanderliegender Flächen befassen. Deshalb sind in Figur 3 einige Möglichkeiten der Formgebung für die Dichtungselemente (19) symbolisch dargestellt, wozu allerdings zu vermerken ist, dass dem Fachmann freigelassen ist, welche der dargestellten Formen zur Verwendung kommen sollen.

### STÜCKLISTE

- 1: Strangpresse
- 2: Zuführschacht
- 3: Füll- und Pressraum
- 4: Strangpresskolben
- 5: Aushärtekanal
- 6: Pressstation
- 7: Dampfzuführstation
- 8: bauliche Einheit
- 9: konventionelle Nachhärtezone = Bremseinheit
- 10: Rahmen
- 11: Presskolben
- 12: starre Kanalwand (Pressbacke)
- 13: bewegliche Kanalwand (Pressbacke)
- 14: Kanal für die Dampfzufuhr
- 15: Einspritzkanal
- 16: Strang
- 17: Strangmantelfläche
- 18: Innenflächen
- 19: Dichtungselement
- 20: Vertiefungen

## Patentansprüche

1. Verfahren zum Strangpressen von mit Bindemitteln vermengten pflanzlichen Kleinteilen, insbesondere aus Holz, bei dem das Kleinteilgemenge aus einem Füllraum (3) mittels eines Strangpresskolbens (4) durch einen formgebenden Rezipienten und einen beheizten Aushärtekanal (5) gepresst und mit Dampf beaufschlagt wird, wobei der Dampf im Bereich des Aushärtekanals (5) auf den verdichteten und im Außenbereich schon in Aushärtung befindlichen Strang von außen her aufgebracht wird, **dadurch**
**gekennzeichnet, dass** die
Strangmantelfläche (17) beidseits der unter Druck stehenden Dampfzufuhr gegen Dampfentweichen abgedichtet und die Aushärtung des Stranges durch Kondensation des Dampfes im Strang herbeigeführt wird, was zu einem plötzlichen Temperaturanstieg führt.

2. Verfahren nach Anspruch 1, **dadurch**
**gekennzeichnet, dass** die Abdichtung der Strangmantelfläche (17) gegen Dampfentweichen durch radial verdichtende Verformung eines Strangabschnittes im Bereich der Dampfzufuhr erfolgt.

3. Verfahren nach Anspruch 1, **dadurch**
**gekennzeichnet, dass** die Abdichtung der Strangmantelfläche (17) gegen Dampfentweichen durch Abdichtelemente erfolgt, die in Strangrichtung beidseits der Dampfzufuhrstellen (7) gegen die Mantelfläche des Stranges dichtend angedrückt werden.

4. Verfahren nach Anspruch 1,
**dadurch gekennzeichnet, dass** die Dampfzufuhr taktweise während des momentanen Strangstillstandes beim Strangpressen vorgenommen wird.

5. Vorrichtung zur Durchführung des Verfahrens nach den Ansprüchen 1, 2 oder 3, **dadurch**
**gekennzeichnet, dass** im Bereich des beheizten Aushärtekanals (5) einer Strangpresse (1) eine auf den peripher schon aushärtenden Strang rundum radial einwirkende Nachpressanordnung mit einer integrierten Dampfzufuhranordnung vorgesehen ist, dergestalt, dass die radiale Formänderung des Stranges ein Abdichtmittel gegen Entweichen des auf den Strangmantel gerichteten Dampfstoßes ist.

6. Vorrichtung zur Durchführung des Verfahrens nach den Ansprüchen 1, 2 und 4, **dadurch**
**gekennzeichnet, dass** im Bereich des beheizten Aushärtekanals (5) einer Strangpresse (1) eine auf den peripher schon aushärtenden Strang rundum radial einwirkende Dampfzuführanordnung im Rahmen einer den Strang umschließenden mehrteiligen-Form vorgesehen ist, dergestalt, dass in Strangrichtung beidseits neben den Dampfzufuhrstellen Dichtungselemente (19) vorgesehen sind,-die auf den Mantel des Stranges einwirken und ein Entweichen des Dampfes längs des Strangmantels erschweren bzw. verhindern.

## Claims

1. Method of extruding plant particles, in particular of wood, which are mixed with binding agents, in which method the particle mixture is forced from a filling space (3) through a shaping container and a heated curing passage (5) by means of an extruder plunger (4) and is acted upon by steam, the steam being applied from outside in the region of the curing passage (5) to the compressed extrudate already being cured in the outer region, **characterized in that** the extrudate lateral surface (17), on both sides of the pressurized steam feed, is sealed off against steam escape and the curing of the extrudate is brought about by condensation of the steam in the extrudate, a factor which leads to a sudden increase in temperature.

2. Method according to Claim 1, **characterized in that** the extrudate lateral surface (17) is sealed off against steam escape by radially compressing deformation of an extrudate section in the region of the steam feed.

3. Method according to Claim 1, **characterized in that** the extrudate lateral surface (17) is sealed off against steam escape by sealing elements which are pressed in a sealing manner against the lateral surface of the extrudate in the direction of the extrudate one both sides of the steam feed points (7).

4. Method according to Claim 1, **characterized in that** the steam feed is carried out cyclically during the instantaneous stoppage of the extrudate during the extrusion.

5. Apparatus for carrying out the method according to Claims 1, 2 or 3, **characterized in that** a subsequent-pressing arrangement acting radially all around on the extrudate already curing peripherally and having an integrated steam feed arrangement is provided in the region of the heated curing passage (5) of an extruder (1) in such a way that the radial change in shape of the extrudate is a sealing means against escape of the steam surge directed towards the extrudate lateral surface.

6. Apparatus for carrying out the method according to Claims 1, 2 and 4, **characterized in that** a steam feed arrangement acting radially all around on the extrudate already curing peripherally is provided in the region of the heated curing passage (5) of an extruder (1) in the frame of a multipiece mould, enclosing the extrudate, in such a way that sealing elements (19) are provided in the direction of the extrudate on both sides next to the steam feed points, which sealing elements (19) act on the lateral surface of the extrudate and hinder or prevent an escape of the steam along the extrudate lateral surface.

## Revendications

1. Procédé pour l'extrusion de petits morceaux de végétaux, en particulier de bois, mélangés à des liants, dans lequel le mélange de petits morceaux est pressé par le piston d'une extrudeuse (4) depuis une chambre de remplissage (3) à travers un récipient donnant la forme et un canal de durcissement (5) chauffé et est soumis à de la vapeur, la vapeur étant appliquée depuis l'extérieur, dans la zone du canal de durcissement (5), sur la barre comprimée et dont la zone extérieure est déjà en cours de durcissement, **caractérisé en ce que** la surface d'enveloppe de la barre (17) est rendue étanche de part et d'autre de l'amenée de vapeur mise sous pression, contre la fuite de vapeur et **en ce que** le durcissement de la barre est obtenu par la condensation de la vapeur dans la barre, ce qui entraîne une augmentation brutale de la température.

2. Procédé selon la revendication 1, **caractérisé en ce que** l'étanchéité de la surface d'enveloppe de la barre (17) contre la fuite de vapeur est obtenue par déformation d'une section de la barre, assurant l'étanchéité radiale, dans la région de l'amenée de vapeur.

3. Procédé selon la revendication 1, **caractérisé en ce que** l'étanchéité de la surface d'enveloppe de la barre (17) contre la fuite de vapeur est obtenue par des éléments d'étanchéité pressés de manière étanche contre la surface d'enveloppe de la barre, dans le sens de la barre, de part et d'autre des points d'amenée de la vapeur (7).

4. Procédé selon la revendication 1, **caractérisé en ce que** l'alimentation en vapeur est réalisée de manière cyclée lors de l'arrêt momentané de la barre, lors de l'extrusion.

5. Dispositif pour la réalisation du procédé selon les revendications 1, 2 ou 3, **caractérisé en ce que**, dans la zone du canal de durcissement chauffé (5) d'une extrudeuse (1), un dispositif de repressage agissant de manière radiale sur tout le tour de la barre, dont la périphérie est déjà en cours de durcissement, avec une installation d'amenée de vapeur intégrée, est prévu, de sorte que le changement de forme radial de la barre constitue un moyen d'étanchéité contre la fuite du choc de vapeur dirigé sur l'enveloppe de la barre.

6. Dispositif pour la réalisation du procédé selon les revendications 1, 2 et 4, **caractérisé en ce que**, dans la zone du canal de durcissement chauffé (5) d'une extrudeuse (1), une installation d'amenée de vapeur agissant de manière radiale sur tout le tour de la barre, dont la périphérie est déjà en cours de durcissement, est prévue dans le cadre d'une matrice en plusieurs parties entourant la barre, de sorte que des éléments d'étanchéité (19) sont prévus dans le sens de la barre, de part et d'autre des points d'amenée de la vapeur, qui agissent sur l'enveloppe de la barre pour rendre plus difficile ou empêcher la fuite de vapeur le long de l'enveloppe de la barre.
